# EUROPÄISCHE PATENTSCHRIFT

(11) **EP 2 980 643 B1**
(45) Veröffentlichungstag und Bekanntmachung des Hinweises auf die Patenterteilung: **22.11.2017**
(21) Anmeldenummer: 15178577.1
(22) Anmeldetag: 28.07.2015
(51) Int. Cl.: G03B 17/02, G03B 17/08, G03B 17/56, H04N 5/225, G08B 13/196

(54) **KAMERAANORDNUNG MIT EINER KAMERAEINHEIT, DIE IN EINER GELENKPFANNE AUFGENOMMEN IST**
CAMERA ASSEMBLY WITH A CAMERA UNIT SUPPORTED BY A BALL JOINT
SYSTÈME DE CAMÉRA AVEC UNE CAMERA SUPPORTÉE DANS UNE JOINT À ROTULE

(30) Priorität: 30.07.2014 DE 202014103540 U
(43) Veröffentlichungstag der Anmeldung: 03.02.2016
(73) Patentinhaber: BURG-WÄCHTER KG, 58540 Meinerzhagen (DE)
(72) Erfinder: LÜLING, Harald, 58540 Meinerzhagen (DE)
(74) Vertreter: Rausch.Wanischeck.Brinkmann.Intellectual Property

(56) Entgegenhaltungen:
- EP-A1- 1 113 408
- EP-A2- 1 096 452
- US-A1- 2012 263 450

## Beschreibung

Die Erfindung betrifft eine Kameraanordnung.

Derartige Kameraanordnungen sind aus dem Stand der Technik bekannt. Es handelt sich hierbei oftmals um an Haltern angeordnete Kameraeinheiten.

Eine gattungsgemäße Kameraanordnung ist beispielsweise aus der US 5,845,885 bekannt. Diese verfügt einen Halter, welcher zwei voneinander beabstandete Gelenkpfannen aufweist. In jeder Gelenkpfanne ist eine Kugel mit einer daran angeordneten Montageplatte aufgenommen. Dadurch kann die Lage der einen Montageplatte relativ zur anderen Montageplatte in unterschiedlichen Raumrichtungen eingestellt werden. Eine der Montageplatten kann mit einem Befestigungsgrund, beispielsweise einer Wand, verbunden werden. An der anderen Montageplatte kann eine Kamera angeordnet werden.

Eine Gelenkpfanne zur Befestigung einer Kamera mit sphärischem Gehäuse ist aus der US2012/0263450A bekannt.

Wenngleich sich die bekannten Kameraanordnungen dem Grunde nach bewährt haben, besteht dennoch Verbesserungsbedarf. So sind die bekannten Kameraanordnungen vergleichsweise sperrig und erfordern eine Vielzahl von Montageschritten bei ihrer Anbringung.

Es ist daher die **Aufgabe** der vorliegenden Erfindung, eine gattungsgemäße Kameraanordnung dahingehend weiterzuentwickeln, dass die Kameraanordnung kompakter ausgebildet werden kann, weniger Montageschritte erfordert und zudem eine einfache Handhabung durch einen Verwender ermöglicht.

Zur **Lösung** schlägt die Erfindung eine Kameraanordnung gemäß Anspruch 1 vor, mit einer Kameraeinheit und einem Halter, wobei der Halter zumindest zwei, zusammen eine Gelenkpfanne bildende Teile aufweist, wobei die die Gelenkpfanne bildenden Teile mit nur einem einzigen Befestigungsmittel gegeneinander verspannbar, insbesondere öffenbar und schließbar sind, wobei die Kameraeinheit zumindest teilweise sphärisch ausgebildet ist, und wobei die Kameraeinheit um zumindest eine Achse drehbar in der Gelenkpfanne aufgenommen ist.

Bei einer Kameraeinheit im Sinne der Erfindung handelt es sich vorzugsweise um eine hinsichtlich ihrer Funktionalität vollwertige Kamera, insbesondere Digitalkamera. Eine Kameraeinheit kann neben einem Gehäuse und einem daran angeordneten Objektiv über einen CCD-Sensor, eine elektronische Schaltung zur Steuerung und/oder dergleichen verfügen. Es kann sich um eine autarke Kameraeinheit handeln, welche über eine eigene Energieversorgung beispielsweise in Form eines Akkus verfügt. In die Kameraeinheit kann zudem ein Datenspeicher integriert sein, beispielsweise in Form eines Flash-Speichers.

Erfindungsgemäß ist vorgesehen, dass die Kameraeinheit zumindest sphärisch ausgebildet ist. Hiermit ist insbesondere gemeint, dass ein Gehäuse der Kameraeinheit zumindest teilweise sphärisch ausgebildet ist. Die Kameraeinheit, insbesondere deren Gehäuse, kann zumindest in einem Bereich um ein Objektiv herum sphärisch ausgebildet sein.

Dadurch, dass die Kameraeinheit zumindest teilweise sphärisch ausgebildet und in der Gelenkpfanne aufgenommen ist, ist die erfindungsgemäße Kameraeinheit selbst Teil eines Kugelgelenks. Die Kameraeinheit kann durch ihre sphärische Ausbildung um zumindest um eine Achse zur Gelenkpfanne, das heißt zum Halter, gedreht werden. Die Form der Gelenkpfanne einerseits und der Kameraeinheit andererseits sind derart aufeinander abgestimmt, dass die Kameraeinheit nach der Art eines Kugelgelenks in die Gelenkpfanne eingesetzt werden kann.

Erfindungsgemäß wird somit im Unterschied zum Stand der Technik auf ein baulich von der Kameraeinheit getrenntes Kugelgelenk zur Lagerung derselben verzichtet. Stattdessen wird die Kameraeinheit selbst als Bestandteil eines Kugelgelenks verwendet. Gemäß der Erfindung erfüllt die Kameraeinheit somit eine Doppelfunktion. Sie dient nicht nur als Kameraeinheit zur Erzeugung von Bildinformationen, sondern zugleich als Teil eines Kugelgelenks. Dadurch können bei einer erfindungsgemäßen Kameraanordnung Bauteile eingespart werden. Zudem kann die Kameraanordnung deutlich kompakter, insbesondere kleiner ausgebildet werden. Hinzu kommt, dass sich die Montage der erfindungsgemäßen Kameraanordnung im Vergleich mit dem Stand der Technik vereinfacht. Dies unter anderem deswegen, da auf eine Montage einer Kameraeinheit an einem die Kameraeinheit lagernden Kugelgelenkshalter vollständig verzichtet werden kann.

Vorteilhaft ist in dem Zusammenhang auch, dass die die Gelenkpfanne bildenden Teile mit nur einem einzigen Befestigungsmittel gegeneinander verspannt werden können. Die Gelenkpfanne kann somit durch Betätigung nur eines einzigen Teils geöffnet werden. Anschließend kann die Kameraeinheit in die Gelenkpfanne eingesetzt werden. Daran anschließend kann die Gelenkpfanne verspannt bzw. geschlossen werden, wobei zuvor noch die Kameraeinheit in gewünschter Weise ausgerichtet werden kann. Hierdurch ergibt sich eine besonders einfache Handhabung, da die Kameraeinheit und somit auch eine Blickrichtung der Kameraeinheit unmittelbar durch Festlegung einer Lage der Kameraeinheit innerhalb des Halters erfolgen kann. Bei dem aus dem Stand der Technik bekannten Kugelgelenkhalter zur Aufnahme einer Kameraeinheit muss zusätzlich zur Ausrichtung des Kugelgelenks auch noch die Kameraeinheit relativ zum Kugelgelenkshalter ausgerichtet werden. Die Erfindung schafft hier eine deutliche Vereinfachung bei der Handhabung und Montage. Erfindungsgemäß bilden die Teile des Halters zwei voneinander beabstandete Gelenkpfannen, wobei die beiden Gelenkpfannen mit nur einem einzigen Befestigungsmittel verspannbar, insbesondere öffenbar und schließbar sind. Gemäß dieser Ausgestaltung kann die Kameraeinheit relativ zum Befestigungsgrund in allen drei Raumrichtungen bewegt werden. Hierdurch lässt sich die Kameraanordnung besonders flexibel einstellen.

Es kann vorgesehen sein, dass in der einen Gelenkpfanne die Kameraeinheit und in der anderen Gelenkpfanne eine einen sphärischen Abschnitt aufweisende Befestigungseinrichtung, insbesondere ein Ständer für die Kameraanordnung aufgenommen ist. Mit der Befestigungseinrichtung kann die Kameraanordnung auf einem Untergrund montiert werden, beispielsweise an einer Wand, einer Decke, dem Boden oder dergleichen. Die Befestigungseinrichtung zeichnet sich dadurch aus, dass sie nicht nur der Befestigung der Kameraanordnung dient, sondern darüber hinaus gleichzeitig Teil eines zweiten Kugelgelenks ist. Die Befestigungseinrichtung erfüllt somit ähnlich wie die Kameraeinheit eine Doppelfunktion. Durch diese Weiterbildung kann die Kameraanordnung noch kompakter ausgebildet werden und hinsichtlich der Handhabung und Montage noch weiter vereinfacht werden.

Das Befestigungsmittel kann eine Schraube sein. Es kann aber auch ein Klemmhebel, Spannhebel und/oder dergleichen verwendet werden. Entscheidend ist, dass mit dem Befestigungsmittel die zumindest zwei Teile des Halters gegeneinander verspannt werden können. Im Falle einer Schraube kann diese beispielsweise in ein Gewinde im ersten Teil eingeschraubt sein und mit einem Kopf in einem zweiten Teil des Halters in axialer Richtung der Schraube anliegen. Durch ein Anziehen der Schraube wird somit das eine Teil des Halters auf das andere Teil zubewegt.Erfindungsgemäß weisen die die Gelenkpfanne zur Aufnahme der Kameraeinheit bildenden Teile jeweils Lagerelemente auf, welche die Kameraeinheit an zwei einander gegenüberliegenden Flächen zwischen sich aufnehmen. Die beiden Befestigungspunkte bzw. -flächen zwischen dem jeweiligen Lagerelement und der Kameraeinheit sind auf einer Verbindungslinie angeordnet, welche durch einen Mittelpunkt der Kameraeinheit verläuft. Die Lagerelemente sind als Arme ausgebildet. Die Lagerelemente schmiegen sich U-förmig um die Kameraeinheit. Dadurch kann die Kameraeinheit sicher durch den Halter gehalten werden bei gleichzeitig großem Bewegungsspielraum relativ zum Halter. Zwischen zumindest einem der Lagerelemente und der Kameraeinheit kann ein nach außen abgedichteter Hohlraum ausgebildet sein. Das Lagerelement liegt nach der Art einer Kopfhörermuschel an der Kameraeinheit an. In dem Hohlraum kann dann beispielsweise eine elektrische Anschlussleitung der Kameraeinheit geführt sein. Durch die Anordnung im Hohlraum ist die elektrische Anschlussleitung vor Manipulationen geschützt. Wird die Kameraanordnung beispielsweise für Überwachungszwecke verwendet, kann die Anschlussleitung nicht einfach durchgeschnitten werden. Von dem Hohlraum zwischen der Kameraeinheit und dem Lagerelement ausgehend kann die elektrische Anschlussleitung durch den Halter, insbesondere ein Gehäuse des Halters weitergeführt werden. Eine elektrische Anschlussleitung kann somit vollständig vor äußeren Zugriffen geschützt innerhalb der Kameraanordnung geführt sein.

Die Kameraeinheit kann wie bereits ausgeführt ein Gehäuse und ein daran angeordnetes Objektiv aufweisen. Das Gehäuse der Kameraeinheit ist zumindest teilweise sphärisch ausgebildet. Das Gehäuse ist also in zumindest einer möglichen Querschnittsebene rund insbesondere kugelförmig ausgebildet. Mit anderen Worten ist die aus dem Querschnitt resultierende Querschnittsfläche bzw. das resultierende Querschnittsprofil rund.

Das Gehäuse ist zumindest teilweise kugelförmig ausgebildet. Vorzugsweise ist das Gehäuse zumindest in einem Bereich um das Objektiv herum spährisch ausgebildet. Das Objektiv selbst kann nach außen hin durch eine sphärische Linse und/oder dgl. begrenzt sein. Die sphärische Form dieser Linse kann der sphärischen Form des Gehäuses entsprechen. Die sphärische Form von Objektiv und Gehäuse kann nahtlos ineinander übergehen. Dadurch kann eine Kameraeinheit geschaffen werden, welche zumindest durch einen sphärischen Teilbereich des Objektivs einerseits und zumindest einen sphärischen Teilbereich des Gehäuses andererseits insgesamt zumindest teilweise sphärisch ausgebildet ist.

Die zuvor beschriebene Ausbildung des Gehäuses der Kameraeinheit, des Objektivs der Kameraeinheit und/oder der Kameraeinheit selbst führt dazu, dass die Kameraeinheit in besonders vielfältiger Weise verwendet werden kann. Sie kann beispielsweise in eine entsprechend ausgebildete Gelenkpfanne eingesetzt werden und anschließend um ihre eigene Achse relativ zum Halter gedreht werden. Dadurch lässt sich das von der Kameraeinheit erzeugte Bild optimal ausrichten. Gegebenenfalls kann die Kameraeinheit nicht nur um die Blickrichtung des Objektivs herum rotiert werden, sondern auch relativ zum Halter verschwenkt werden. Die Blickrichtung des Objektivs der Kameraeinheit kann so den Nutzerwünschen frei angepasst werden. Die Kameraeinheit kann in zwei oder sogar allen drei Raumrichtungen relativ zum Halter verschwenkt, insbesondere gedreht werden.

Bekannte Objektive sind oftmals im Querschnitt rund. Es können nun sowohl das Gehäuse der Kameraeinheit als auch das Objektiv rund ausgebildet sein. Auf diese Weise kann eine Kameraeinheit geschaffen werden, bei welcher das Objektiv und das Gehäuse dem Grunde nach nahtlos ineinander übergehen.

Das Gehäuse kann insbesondere rechtwinklig zur Blickrichtung des Objektivs einen runden Querschnitt und/oder die sphärische Form aufweisen. Dies meint beispielsweise, dass das Gehäuse um das Objektiv herum rund ausgebildet ist. Der Mittelpunkt der Kugelform liegt dann auf der Achse der Blickrichtung des Objektivs. Das Gehäuse selbst kann ebenfalls zumindest teilweise spährisch ausgebildet sein.

Gemäß einer vorteilhaften Weiterbildung der Erfindung ist eine Vielzahl von unterschiedlich ausgebildeten Haltern vorgesehen, in welche die Kameraeinheit nach einem Baukastenprinzip wahlweise aufnehmbar ist. Es können viele verschiedene Halter vorgesehen sein, welche allesamt mit der Kameraeinheit kombinierbar sind. Die Kameraeinheit kann beispielsweise in die Halter eingeschoben, eingesteckt, aufgeklipst, eingeschraubt werden und/oder dergleichen. Durch den vergleichsweise einfachen Aufbau der Kameraanordnung kann benutzerseitig sehr einfach und schnell eine gewünschte Kombination aus Kameraeinheit einerseits und einem ausgewählten Halter andererseits ausgebildet werden. Der Benutzer kann zudem sehr einfache eine einmal montierte Kameraanordnung wieder lösen und die Kameraeinheit mit einem anderen Halter kombinieren. Die Erfindung schlägt somit erstmalig ein solches Baukastensystem vor, bei welchem die Kameraeinheit im Querschnitt rund insbesondere sphärisch ausgebildet ist. Die Halter können eine entsprechend runde insbesondere sphärische Aufnahme für die Kamera bereitstellen. Somit ergibt sich ein System, bei welchem aufgrund der Rundheit bzw. sphärischen Form die Kameraeinheit relativ zum Halter rotiert werden kann. Hierdurch ergeben sich mehr Freiheiten bei der Anordnung und Ausrichtung der Kameraeinheit.

Gemäß einer vorteilhaften Weiterbildung der Erfindung weist die Kameraeinheit eine datentechnische Kommunikationsschnittstelle auf. Diese dient dazu, von außerhalb mit der Kameraeinheit kommunizieren zu können. Dies umfasst beispielsweise eine Programmierung der Kameraeinheit, ein Herunterladen oder Streamen von Kamerabildern auf einen Computer und/oder dgl. Die Kommunikationsschnittstelle dient darüber hinaus aber auch dazu, eine Kommunikationsverbindung zwischen zwei technischen Geräten herzustellen, deren eigene Kommunikationsschnittstellen nicht zueinander kompatibel sind. Die Kommunikationsschnittstelle der Kameraeinheit ist hierzu derart ausgebildet, dass eine Kommunikationsverbindung zwischen einem mobilen Endgerät eines Benutzers und einer technischen Einrichtung, insbesondere einem Türschloss, herstellbar ist, wobei sich die Kommunikationsschnittstellen des mobilen Endgerätes und der technischen Einrichtung hinsichtlich des Kommunikationsstandards unterscheiden. Die Kameraeinheit kann somit als eine Art Wandler für verschiedene Kommunikationsschnittstellen dienen. Sie kann beispielsweise Informationen aus einem Datennetz wie GSM, WLAN, LAN und/oder dgl. in Informationen einer Nahbereichskommunikationsschnittstelle wandeln, wie beispielsweise Bluetooth, NFC, RFID und/oder dgl. Auf diese Weise kann beispielsweise ein Türschloss, welches beispielsweise aus energietechnischen Gründen nur über einen RFID-Transponder und/oder dgl. verfügt, von einem weit entfernten Ort mittels eines mobilen Endgerätes wie beispielsweise eines Smartphones betätigt werden. Dies geschieht dadurch, dass das Smartphone beispielsweise per GSM mit der Kameraeinheit kommuniziert, welche wiederum mit der RFID-Schnittstelle des Türschlosses kommuniziert. Die Kommunikationsschnittstelle der Kameraeinheit kann dadurch gekennzeichnet sein, dass sie eine Vielzahl unterschiedlicher Kommunikationsstandards unterstützt. Auch die Kameraeinheit kann eine Vielzahl von Kommunikationsschnittstellen für unterschiedliche Kommunikationsstandards aufweisen.

Die Halter können dem Grunde nach beliebig und ganz unterschiedlich ausgebildet sein. Einer der Halter kann als Standfuß ausgebildet sein. Die Kameraeinheit kann auf dem Standfuß angeordnet werden. Ein solcher Standfuß kann beispielsweise in geschlossenen Räumen verwendet werden, da die Kameraeinheit dort nicht der Witterung ausgesetzt ist. Der Halter kann eine Halterung zur Befestigung der gesamten Kameraanordnung aufweisen. Hierbei kann es sich um einen Saugnapf, Befestigungsmitteln wie Schrauben, einen mit Klebeband versehenen Bereich und/oder dergleichen handeln.

Gemäß einer vorteilhaften Weiterbildung der Erfindung kann die Kameraeinheit wasserdicht ausgebildet sein. Die Kameraeinheit kann insbesondere über ein gekapseltes Gehäuse verfügen. Das Gehäuse kann einstückig, monolithisch ausgebildet sein. Dadurch lässt sich die Kameraeinheit beispielsweise auch im Außenbereich zur Überwachung von Gärten und/oder dergleichen verwenden.

Gemäß einer vorteilhaften Weiterbildung der Erfindung weist ein Halter eine datentechnische Kommunikationsschnittstelle zur Verbindung mit der Kameraeinheit auf. Es kann sich hierbei um eine kabelgebundene Kommunikationsschnittstelle, beispielsweise in Form einer Steckverbindung und/oder dgl. handeln. Es kann vorgesehen sein, dass zum Betrieb der Kameraeinheit erforderliche Funktionalitäten zumindest teilweise von dem Halter bereitgestellt werden. Beispielsweise kann in dem Halter eine Energieversorgung vorgesehen sein, welche über die Kommunikationsschnittstelle mit der Kameraeinheit gekoppelt wird. Der Halter kann eine Benutzerschnittstelle, insbesondere einen Schalter und/oder ein Anzeigeelement, zur Bedienung der Kameraeinheit aufweisen. Dies bringt u.a. die Besonderheit mit sich, dass die Kameraeinheit selbst bedienelementfrei ausgebildet sein kann. Dadurch kann die Kameraeinheit besonders kompakt und kostengünstig hergestellt werden.

Weitere Vorteile und Merkmale der Erfindung ergeben sich aus der nachfolgenden Figurenbeschreibung. Es zeigen:
Fig. 1 eine erste Ausführungsform einer erfindungsgemäßen Kameraanordnung in perspektivischer Darstellung;
Fig. 2 die Ausführungsform gemäß Fig. 1 in Seitenansicht; und
Fig. 3 eine weitere Ausführungsform einer erfindungsgemäßen Kameraanordnung.

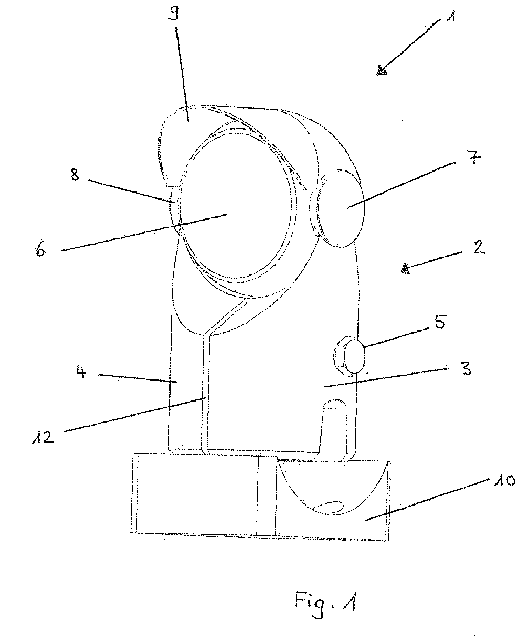

Fig. 1 zeigt eine Ausführungsform einer erfindungsgemäßen Kameraanordnung 1. Die Kameraanordnung 1 verfügt über eine Kameraeinheit 6 und einen Halter 2. Der Halter 2 ist zweiteilig ausgebildet, nämlich aus den beiden Teilen 3, 4. Diese tragen an ihren oberen Enden Lagerelemente 7, 8. Zwischen diesen Lagerelementen 7, 8 ist eine sphärische Aufnahme ausgebildet. Diese dient als Gelenkpfanne für ein Kugelgelenk.

Die Kameraeinheit 6 ist zumindest teilweise sphärisch ausgebildet. Die Form der Kameraeinheit 6 korrespondiert zur sphärischen Form der Aufnahme zwischen den beiden Lagerelementen 7, 8. Die Kameraeinheit 6 ist im endmontierten Zustand zwischen diesen beiden Lagerelementen 7, 8 aufgenommen. Die Kameraeinheit 6 dient somit neben ihrer Funktionalität als Kamera zugleich als Funktionselement des Kugelgelenks.

Die Kameraeinheit 6 kann relativ zum Halter 2 gedreht werden. Eine Drehung ist zumindest um eine Achse möglich. Vorzugsweise kann die Kameraeinheit 6 aber um zwei oder sogar drei Achsen relativ zum Halter 2 gedreht werden.

Die beiden Teile 3, 4 können mittels einer Schraube 5 gegeneinander verspannt werden. Die Teile 3, 4 sind unter Belassung eines Spalts 12 durch die Schraube 5 miteinander verbunden. Die Dicke des Spalts 12 ist derart gewählt, dass die beiden Teile 3, 4 im Falle einer zwischen ihnen aufgenommenen und fest eingespannten Kameraeinheit 6 immer noch voneinander beabstandet sind.

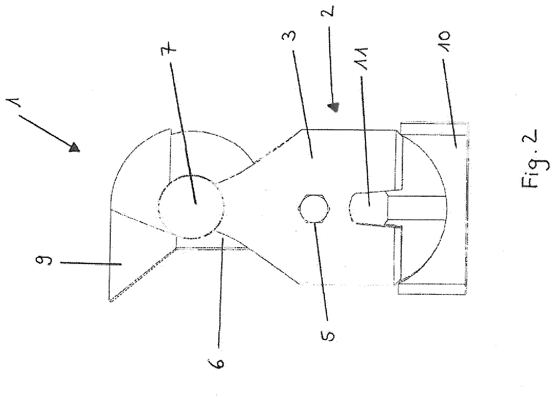

Die Kameraanordnung 1 weist ein zweites Kugelgelenk auf. Details dieses zweiten Kugelgelenks gehen insbesondere aus Fig. 2 hervor. Es ist ein Ständer 10 vorgesehen, welcher eine Kugel 11 trägt. Die Kugel 11 kann an einem stabförmigen Halter und/oder dergleichen angeordnet sein. Die Kugel 11 ist in einer zweiten Gelenkpfanne des Halters 2 aufgenommen. Hierzu weisen die beiden Teile 3, 4 entsprechende Ausnehmungen auf. Eine Besonderheit besteht nun darin, dass mittels nur einer einzigen Schraube 5 beide Kugelgelenke betätigt werden können. Das heißt beide Kugelgelenke werden durch Lösen der Schraube 5 geöffnet und durch Anziehen der Schraube 5 fest verspannt. Dadurch wird die Handhabung der Kameraanordnung 1 deutlich vereinfacht.

Der Ständer 10 weist eine konkave Ausnehmung auf. In dieser konkaven Ausnehmung kann der Halter 2 bewegt werden. Durch die Ausnehmung kann der Halter 2 somit über einen vergleichsweise großen Winkelbereich relativ zum Ständer 10 verstellt werden.

Eines der Lagerelemente 7, 8 kann derart ausgebildet sein, dass es unter Belassung eines Hohlraums dichtend an der Kameraeinheit 6 anliegt. Die Kontaktfläche zwischen dem Lagerelement und der Kameraeinheit 6 kann dann ringförmig ausgebildet sein. In dem Hohlraum kann eine elektrische Anschlussleitung der Kameraeinheit 6 verlegt sein. Dies hat den Vorteil, dass die Anschlussleitung von außerhalb nicht zugänglich ist.

Die Anschlussleitung kann darüber hinaus innerhalb des Halters 2 weitergeführt sein, so dass sie dem Grunde nach überhaupt nicht von außerhalb zugänglich ist. Dadurch kann die Manipulationssicherheit deutlich erhöht werden.

Die Kameraeinheit 6 kann optional durch einen Schirm 9 geschützt werden, beispielsweise vor Witterungseinflüssen wie Regenwasser und/oder dergleichen. Der Schirm 9 kann entweder an der Kameraeinheit 6 selbst oder am Halter 2 angeordnet sein. Der Schirm 9 kann beispielsweise oben an den beiden Lagerelementen 7, 8 angeordnet sein. Der Schirm 9 ist vorzugsweise von der Kameraeinheit 6 beabstandet, so dass eine Bewegung der Kameraeinheit 6 nicht durch den Schirm 9 behindert wird.

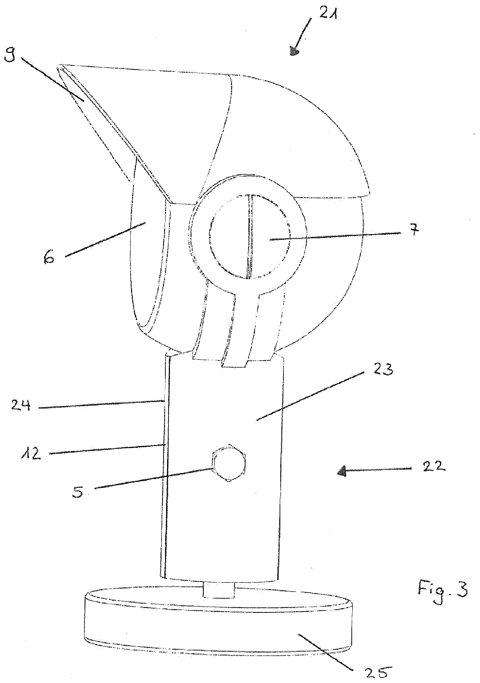

Fig. 3 zeigt eine zweite Ausführungsform einer erfindungsgemäßen Kameraanordnung 21. Im Unterschied zur Ausführungsform nach den Fign. 1 und 2 ist ein Halter 22 der Kameraanordnung 21 deutlich schlanker ausgebildet Er verfügt über eine Art Grundkörper, welcher einen deutlich geringeren Durchmesser als die Kameraeinheit 6 aufweist. Nichtsdestotrotz tragen zwei Teile 23, 24 des Halters 22 ebenfalls zwei Lagerelemente 7, 8. Diese sind jedoch über sich aufspreizende Arme mit den übrigen Teilen des Halters 22 verbunden. In diesem Zusammenhang wird deutlich, dass nach einem Merkmal der Erfindung die vom Halter bereitgestellte Gelenkpfanne für die Kameraeinheit 6 nur eine vergleichsweise kleine Kontaktfläche aufzuweisen braucht. Es kann beispielsweise ausreichend sein, wenn die Kameraeinheit 6 ausschließlich zwischen den beiden Lagerelementen 7, 8 aufgenommen ist.

Die Kameraanordnung 21 verfügt ebenfalls über einen Ständer 25, welcher ebenso wie der Ständer 10 eine Kugel für ein Kugelgelenk bereitstellt. Im Unterschied zum Ständer 10 weist der Ständer 25 jedoch eine flache Grundplatte auf. Diese hat den Vorteil, dass der Ständer 25 damit besonders einfach an einem Montagegrund angebracht werden kann.

### Bezugszeichen

- 1: Kameraanordnung
- 2: Halter
- 3, 4: Teil
- 5: Schraube
- 6: Kameraeinheit
- 7, 8: Lagerelement
- 9: Schirm
- 10: Ständer
- 11: Kugel
- 12: Spalt
- 21: Kameraanordnung
- 22: Halter
- 23, 24: Teil
- 25: Ständer

## Patentansprüche

1. Kameraanordnung (1, 21) mit einer Kameraeinheit (6) und einem Halter (2, 22), wobei der Halter (2, 22) zumindest zwei, Teile (3, 4, 23, 24) aufweist, die zusammen zwei voneinander beabstandete Gelenkpfannen bilden, wobei die eine erste Gelenkpfanne zur Aufnahme der Kameraeinheit (6) bildenden Teile (3, 4, 23, 24) jeweils Lagerelemente (7, 8) aufweisen, welche die Kameraeinheit (6) zwischen sich aufnehmen und Befestigungspunkte bzw. -flächen zwischen dem jeweiligen Lagerelement (7, 8) und der Kameraeinheit (6) ausbilden, die auf einer durch einen Mittelpunkt der Kameraeinheit (6) verlaufenden Verbindungslinie angeordnet sind, wobei die Lagerelemente (7, 8) als Arme ausgebildet sind und sich U-förmig um die Kameraeinheit (6) schmiegen und nach Art einer Kopfhörermuschel an der Kameraeinheit (6) anliegen, wobei die Teile (3, 4, 23, 24) der ersten Gelenkpfanne und der zweiten Gelenkpfanne mit nur einem einzigen Befestigungsmittel (5) gegeneinander verspannbar, insbesondere öffenbar und schließbar sind, wobei die Kameraeinheit (6) zumindest teilweise sphärisch ausgebildet ist, und wobei die Kameraeinheit (6) um zumindest eine Achse drehbar in der Gelenkpfanne aufgenommen ist.

2. Kameraanordnung nach Anspruch 1, **dadurch gekennzeichnet, dass** in der einen Gelenkpfanne die Kameraeinheit (6) und in der anderen Gelenkpfanne eine einen sphärischen Abschnitt aufweisende Befestigungseinrichtung, insbesondere ein Ständer (10) für die Kameraanordnung aufgenommen ist.

3. Kameraanordnung nach einem der vorangehenden Ansprüche, **dadurch gekennzeichnet, dass** das Befestigungsmittel (5) eine Schraube ist.

4. Kameraanordnung nach Anspruch 3, **dadurch gekennzeichnet, dass** die Schraube (5) mit einem Gewinde in einem ersten Teil (3, 4, 23, 24) des Halters (2, 22) verbunden ist und dass ein Kopf der Schraube an einen zweiten Teil (3, 4, 23, 24) des Halters (2, 22) anliegt.

5. Kameraanordnung nach einem der vorangehenden Ansprüche, **dadurch gekennzeichnet, dass** die die Gelenkpfanne zur Aufnahme der Kameraeinheit dienenden Lagerelemente (7, 8) die Kameraeinheit (6) an zwei einander gegenüberliegenden Flächen zwischen sich aufnehmen.

6. Kameraanordnung nach Anspruch 5, **dadurch gekennzeichnet, dass** zwischen zumindest einem der Lagerelemente (7, 8) und der Kameraeinheit (6) ein nach außen abgedichteter Hohlraum ausgebildet ist.

7. Kameraanordnung nach Anspruch 6, **dadurch gekennzeichnet, dass** in dem Holraum eine elektrische Anschlussleitung der Kameraeinheit (6) geführt ist.

8. Kameraanordnung nach einem der vorangehenden Ansprüche, **dadurch gekennzeichnet, dass** die Kameraeinheit (6) ein Gehäuse und ein daran angeordnetes Objektiv aufweist.

9. Kameraanordnung nach Anspruch 8, **dadurch gekennzeichnet, dass** das Gehäuse der Kameraeinheit (6) zumindest teilweise sphärisch ausgebildet ist.

10. Kameraanordnung nach Anspruch 9, **dadurch gekennzeichnet, dass** das Gehäuse der Kameraeinheit (6) in einem Bereich um das Objektiv herum sphärisch ausgebildet ist.

11. Kameraanordnung nach einem der vorangehenden Ansprüche, **gekennzeichnet durch** eine Vielzahl von unterschiedlich ausgebildeten Haltern (2, 22), in welchen die Kameraeinheit (6) nach einem Baukastenprinzip wahlweise aufnehmbar ist.

12. Kameraanordnung nach einem der vorangehenden Ansprüche, **dadurch gekennzeichnet, dass** die Kameraeinheit (6) eine datentechnische Kommunikationsschnittstelle aufweist.

13. Kameraanordnung nach einem der vorangehenden Ansprüche, **dadurch gekennzeichnet, dass** ein Halter (2, 22) eine datentechnische Kommunikationsschnittstelle zur Verbindung mit der Kameraeinheit (6) aufweist.

14. Kameraanordnung nach einem der vorangehenden Ansprüche, **dadurch gekennzeichnet, dass** ein Halter (2, 22) eine Benutzerschnittstelle, insbesondere einen Schalter und/oder ein Anzeigeelement, zur Bedienung der Kameraeinheit (6) aufweist.

15. Kameraanordnung nach einem der vorangehenden Ansprüche, **dadurch gekennzeichnet, dass** die Kameraeinheit (6) bedienelementfrei ausgebildet ist.

16. Kameraanordnung nach einem der vorangehenden Ansprüche, **dadurch gekennzeichnet, dass** die Kameraeinheit (6) wasserdicht ausgebildet ist.

## Claims

1. Camera assembly (1, 21), comprising a camera unit (6) and a holder (2, 22), wherein the holder (2, 22) at least comprises two parts (3, 4, 23, 24) which together form two mutually spaced sockets, wherein the parts (3, 4, 23, 24) forming a first socket for receiving the camera unit (6) each comprise bearing elements (7, 8) receiving the camera unit (6) between them and forming fixing points or surfaces between the respective bearing element (7, 8) and the camera unit (6) that are disposed on a connecting line passing through a center of the camera unit (6), wherein the bearing elements (7, 8) are designed as legs snuggling up to the camera unit (6) in a U-shaped manner and bearing against the camera unit (6) in the manner of earphone shells, wherein the parts (3, 4, 23, 24) of the first socket and the second socket can be clamped against each other, in particular opened and closed, by means of a single fixing element (5), wherein the camera unit (6) is at least partially spherical, and wherein the camera unit (6) is received in the socket for rotation about at least one axis.

2. Camera assembly according to claim 1, **characterized in that** the camera unit (6) is received in one of the sockets and a fixing device including a spherical part, in particular a support (10) for the camera assembly, is received in the other one of the sockets.

3. Camera assembly according to one of the preceding claims, **characterized in that** the fixing device (5) is a screw.

4. Camera assembly according to claim 3, **characterized in that** the screw (5) with a thread is connected to a first part (3, 4, 5, 23, 24) of the holder (2, 22) and that a head of the screw rests against a second part (3, 4, 23, 24) of the holder (2, 22).

5. Camera assembly according to one of the preceding claims, **characterized in that** the bearing elements (7, 8) serving for the socket to receive the camera unit, receive the camera unit (6) therebetween at two mutually opposite surfaces.

6. Camera assembly according to claim 5, **characterized in that** between at least one of the bearing elements (7, 8) and the camera unit (6) a cavity is formed that is sealed off towards the outside.

7. Camera assembly according to claim 6, **characterized in that** an electrical connection line is guided in the camera unit (6).

8. Camera assembly according to one of the preceding claims, **characterized in that** the camera unit (6) includes a housing and a lens fixed to the housing.

9. Camera assembly according to claim 8, **characterized in that** the housing of the camera unit (6) is at least partially spherically shaped.

10. Camera assembly according to claim 9, **characterized in that** the housing of the camera unit (6) is spherically shaped in a region around the lens.

11. Camera assembly according to one of the preceding claims, **characterized by** a plurality of differently designed holders (2, 22) in which the camera unit (6) can be selectively received according to a modular principle.

12. Camera assembly according to one of the preceding claims, **characterized in that** the camera unit (6) comprises an IT communication interface.

13. Camera assembly according to one of the preceding claims, **characterized in that** a holder (2, 22) comprises an IT communication interface for connection with the camera unit (6).

14. Camera assembly according to one of the preceding claims, **characterized in that** a holder (2, 22) comprises a user interface, in particular a switch and/or a display element, for operating the camera unit (6).

15. Camera assembly according to one of the preceding claims, **characterized in that** the camera unit (6) is configured without any operating elements.

16. Camera assembly according to one of the preceding claims, **characterized in that** the camera unit (6) is constructed so as to be watertight.

## Revendications

1. Système de caméra (1, 21), comprenant une unité de caméra (6) et un support (2, 22), ledit support (2, 22) comportant au moins deux pièces (3, 4, 23, 24) formant deux cavités articulaires espacées l'une de l'autre, les pièces (3, 4, 23, 24) formant une première cavité articulaire pour loger l'unité de caméra (6) respectivement présentant des éléments de palier (7, 8) qui reçoivent l'unité de caméra (6) entre eux et forment des points de fixation ou des surfaces de fixation entre l'élément de palier (7, 8) respectif et l'unité de caméra (6) disposés sur une ligne de jonction passant par un centre de l'unité de caméra (6), les éléments de palier (7, 8) étant réalisés sous forme de bras et épousant l'unité de caméra (6) en forme de U et s'appliquant contre l'unité de caméra (6) à la manière d'une coquille d'écouteur, les pièces (3, 4, 23, 24) de la première cavité articulaire et de la deuxième cavité articulaire pouvant être serrées l'une contre l'autre, en particulier ouverte et fermée, par un seul moyen de fixation (5), l'unité de caméra (6) étant formée de manière sphérique au moins en partie, et l'unité de camera (6) étant logée dans la cavité articulaire pour tourner autour d'au moins un axe.

2. Système de caméra selon la revendication 1, **caractérisé en ce que** dans l'une des cavités articulaires est logée l'unité de caméra (6) et dans l'autre des cavités articulaires est logé un dispositif de fixation présentant une partie sphérique, en particulier un montant (10) pour le système de caméra.

3. Système de caméra selon l'une des revendications précédentes, **caractérisé en ce que** le dispositif de fixation (5) est un vis.

4. Système de caméra selon la revendication 3, **caractérisé en ce que** le vis (5) est relié à une première pièce (3, 4, 23, 24) du support (2, 22) par un filetage et qu'une tête de vis s'appuie sur une deuxième pièce (3, 4, 23, 24) du support (2, 22).

5. Système de caméra selon l'une des revendications précédentes, **caractérisé en ce que** les éléments de palier (7, 8) servant à la cavité articulaire pour loger l'unité de caméra reçoivent entre eux l'unité de caméra (6) aux deux surfaces opposées.

6. Système de caméra selon la revendication 5, **caractérisé en ce qu'**entre au moins un des éléments de palier (7, 8) et l'unité de caméra (6) est formée une cavité rendue étanche vers l'extérieur.

7. Système de caméra selon la revendication 6, **caractérisé en ce que** dans ladite cavité est guidée une ligne de connexion électrique de l'unité de caméra (6).

8. Système de caméra selon l'une des revendications précédentes, **caractérisé en ce que** l'unité de caméra (6) comporte un boîtier et un objectif disposé sur celui-ci.

9. Système de caméra selon la revendication 8, **caractérisé en ce que** le boîtier de l'unité de caméra (6) est formé de manière sphérique au moins en partie.

10. Système de caméra selon la revendication 9, **caractérisé en ce que** le boîtier de l'unité de caméra (6) est formé de manière sphérique dans une région autour de l'objectif.

11. Système de caméra selon l'une des revendications précédentes, **caractérisé par** une pluralité de supports (2, 22) de formes différentes dans lesquels l'unité de caméra (6) peut être sélectivement reçue selon le principe modulaire.

12. Système de caméra selon l'une des revendications précédentes, **caractérisé en ce que** l'unité de caméra (6) présente une interface de communication informatique.

13. Système de caméra selon l'une des revendications précédentes, **caractérisé en ce qu'**un support (2, 22) présente une interface de communication informatique pour la connexion à l'unité de caméra (6).

14. Système de caméra selon l'une des revendications précédentes, **caractérisé en ce qu'**un support (2, 22) présente une interface utilisateur, en particulier un commutateur et/ou un élément d'affichage, pour le maniement de l'unité de caméra (6).

15. Système de caméra selon l'une des revendications précédentes, **caractérisé en ce que** l'unité de caméra (6) est formée libre d'éléments de commande.

16. Système de caméra selon l'une des revendications précédentes, **caractérisé en ce que** l'unité de caméra (6) est formée de manière étanche à l'eau.
